# EUROPÄISCHE PATENTSCHRIFT

(11) **EP 4 157 594 B1**
(45) Veröffentlichungstag und Bekanntmachung des Hinweises auf die Patenterteilung: **30.07.2025**
(21) Anmeldenummer: 21726575.0
(22) Anmeldetag: 10.05.2021
(51) Int. Cl.: B25J 9/16, B05B 13/04, B05B 12/08

(54) **PROGRAMMIERVERFAHREN FÜR EINE BESCHICHTUNGSANLAGE UND ENTSPRECHENDE BESCHICHTUNGSANLAGE**
PROGRAMMING METHOD FOR A COATING INSTALLATION, AND CORRESPONDING COATING INSTALLATION
PROCÉDÉ DE PROGRAMMATION D'UNE INSTALLATION DE REVÊTEMENT ET INSTALLATION DE REVÊTEMENT CORRESPONDANTE

(30) Priorität: 27.05.2020 DE 102020114201
(43) Veröffentlichungstag der Anmeldung: 05.04.2023
(73) Patentinhaber: Dürr Systems AG, 74321 Bietigheim-Bissingen (DE)
(72) Erfinder: NOLTE, Hans-Jürgen, 74354 Besigheim (DE); HECKELER, Christoph, 71272 Renningen (DE); BRINGEWAT, Tjark, 70565 Stuttgart (DE); FISCHER, Andreas, 71636 Ludwigsburg (DE); HERRMANN, Oliver, 74343 Sachsenheim (DE)
(74) Vertreter: v. Bezold & Partner Patentanwälte - PartG mbB
(86) Internationale Anmeldenummer: PCT/EP2021/062254
(87) Internationale Veröffentlichungsnummer: WO 2021/239447

(56) Entgegenhaltungen:
- EP-A2- 2 468 463
- WO-A1-2020/234008
- CN-B- 106 354 932

## Beschreibung

Die Erfindung betrifft ein Verfahren zur Programmierung einer programmgesteuerten Beschichtungsanlage, insbesondere für eine Lackieranlage zur Lackierung von Kraftfahrzeugkarosseriebauteilen.

In modernen Lackieranlagen zur Lackierung von Kraftfahrzeugkarosseriebauteilen wird als Applikationsgerät üblicherweise ein Rotationszerstäuber eingesetzt, der von einem mehrachsigen Lackierroboter über die zu lackierenden Kraftfahrzeugkarosseriebauteile geführt wird. Der Betrieb der Lackieranlage und damit auch die Ansteuerung des Lackierroboters und des Rotationszerstäubers erfolgt hierbei programmgesteuert. Vor dem eigentlichen Lackierbetrieb ist deshalb eine Programmierung der Lackieranlage erforderlich. Im Rahmen dieser Programmierung werden Roboterbahnen offline geplant, die von einem Farbauftreffpunkt des Rotationszerstäubers abgefahren werden sollen, wobei vorgegebene Lackierrichtlinien berücksichtigt werden, die beispielsweise den Bahnabstand und die Bahngeschwindigkeit vorgeben. Darüber hinaus werden im Rahmen der Programmierung Applikationsparameter für den Rotationszerstäuber festgelegt, wie beispielsweise Lackausflussrate, Drehzahl, Lenkluftstrom, etc., wobei diese Festlegung der Applikationsparameter gemäß vorgegebenen Lackierrichtlinien und basierend auf Erfahrungswerten des Fachpersonals erfolgt. Ziel der Programmierung ist hierbei unter anderem eine möglichst homogene Schichtdickenverteilung der Lackschicht auf dem zu beschichtenden Bauteil. Im Rahmen der Programmierung wird deshalb die Schichtdickenverteilung optimiert, indem in mehreren Iterationsschleifen die Applikationsparameter und die Bahnverläufe der Roboterbahn anhand von Lackierversuchen auf Testkarosserien variiert werden. Nachteilig an diesem bekannten Programmierverfahren ist der hohe Aufwand an Zeit, Lackmaterial und Testkarosserien.

In einer neueren, bisher noch nicht in die Praxis umgesetzten Entwicklungslinie wird dagegen versucht, den Lackierprozess vollständig physikalisch zu simulieren, so dass die Optimierung der Roboterbahn und der Applikationsparameter dann im Rahmen einer Simulation erfolgen kann. Nachteilig an dieser neuen Entwicklungslinie ist jedoch der hohe rechnerische Aufwand im Rahmen der Simulation, so dass der Zeitaufwand für die Berechnung bisher noch nicht praktikabel ist.

Zum allgemeinen technischen Hintergrund der Erfindung ist auch hinzuweisen auf US 2012/0156362 A1 und DE 196 51 716 A1.

Schließlich offenbart CN 106 354 932 B ein Verfahren gemäß dem Oberbegriff von Anspruch 1. Dieses bekannte Verfahren ist jedoch noch nicht vollständig befriedigend.

Der Erfindung liegt deshalb die Aufgabe zugrunde, ein verbessertes Verfahren zur Programmierung einer programmgesteuerten Beschichtungsanlage zu schaffen. Weiterhin liegt der Erfindung die Aufgabe zugrunde, eine entsprechend angepasste Beschichtungsanlage zu schaffen.

Diese Aufgabe wird durch ein erfindungsgemäßes Verfahren bzw. durch eine erfindungsgemäße Beschichtungsanlage gemäß den unabhängigen Ansprüchen gelöst.

Das erfindungsgemäße Programmierverfahren sieht zunächst vor, dass Geometriedaten bereitgestellt werden, wobei die Geometriedaten die Geometrie des zu beschichtenden Bauteils (z.B. Kraftfahrzeugkarosseriebauteil) wiedergeben. Die Geometriedaten können im Rahmen des erfindungsgemäßen Programmierverfahrens beispielsweise anhand eines realen Bauteils vermessen oder vorgegeben werden, beispielsweise in Dateiform.

Weiterhin sieht das erfindungsgemäße Programmierverfahren vor, dass Roboterbahndaten vorgegeben werden, wobei die Roboterbahndaten eine Roboterbahn definieren, die von einem Farbauftreffpunkt (TCP: Tool Center Point) des von dem Beschichtungsroboter geführten Applikationsgeräts im Beschichtungsbetrieb abgefahren werden soll.

Hierbei ist zu erwähnen, dass die Erfindung hinsichtlich des Typs des Applikationsgeräts nicht auf den eingangs erwähnten Rotationszerstäuber beschränkt ist. Vielmehr kann es sich bei dem Applikationsgerät auch um einen Druckkopf handeln, der im Gegensatz zu einem Zerstäuber keinen Sprühstrahl des Beschichtungsmittels abgibt, sondern einen räumlich eng begrenzten Beschichtungsmittelstrahl. Alternativ besteht im Rahmen der Erfindung auch die Möglichkeit, dass es sich bei dem Applikationsgerät um einen Airless-Zerstäuber oder einen Airmix-Zerstäuber handelt, um nur einige weitere Beispiele zu nennen.

Weiterhin sieht das erfindungsgemäße Programmierverfahren vor, dass Spritzbilddaten ermittelt werden, die auch als "Brush-Kurven" bezeichnet werden können, wobei die Spritzbilddaten ein Schichtdickenprofil wiedergeben, insbesondere ein dreidimensionales Schichtdickenprofil, das im realen Beschichtungsbetrieb von dem Applikationsgerät auf der Oberfläche des Bauteils um den Farbauftreffpunkt herum erzeugt wird. So erzeugen beispielsweise Rotationszerstäuber bei einer flächennormalen Beschichtung einer ebenen Bauteiloberfläche bei idealisierter Betrachtung ein rotationssymmetrisches, Donut-förmiges Schichtdickenprofil. Die Spritzbilddaten können dann den Verlauf der Schichtdicke in Abhängigkeit von dem radialen Abstand zum Farbauftreffpunkt wiedergeben. Dreidimensionale Schichtdickenprofile (statische Spritzbilder) lassen sich z.B. in zweidimensionalen Schichtdickenquerschnitte (dynamische Spritzbilder) überführen, aus denen die Spritzbilddaten ermittelt werden können, z.B. bei einer Kennfeld-Erstellung. Es besteht jedoch im Rahmen der Erfindung auch die Möglichkeit, dass die Spritzbilddaten dynamische Spritzbilder wiedergeben, wie beispielsweise einen Schichtdicken-Querschnitt entlang einer Lackierbahn.

Im Rahmen der Erfindung erfolgt eine Simulation des Beschichtungsergebnisses anhand der Spritzbilddaten, wobei die Spritzbilddaten so lange optimiert werden, bis ein akzeptables Beschichtungsergebnis simuliert wird. Die akzeptablen Spritzbilddaten werden dann in einem ersten Datensatz gespeichert, um daraus später die passenden Applikationsparameter (z.B. Lackstrom, Lenkluftstrom, Drehzahl des Rotationszerstäubers, etc.) zu ermitteln, die zur praktischen Realisierung der zuvor ermittelten Spritzbilddaten geeignet sind.

Es kann jedoch vorkommen, dass bei der vorgegebenen Roboterbahn auch die am besten geeigneten Spritzbilddaten nicht zu einem akzeptablen Beschichtungsergebnis führen. In diesem Fall ist es sinnvoll, nicht nur die Spritzbilddaten zu optimieren, sondern auch die Roboterbahn. In einem Ausführungsbeispiel der Erfindung wird deshalb geprüft, ob das simulierte Beschichtungsergebnis mit den am besten geeigneten Spritzbilddaten zu einem akzeptablen Beschichtungsergebnis führt. Falls dies der Fall ist, so ist keine Optimierung der Roboterbahn erforderlich und die im Rahmen der Simulation ermittelten, am besten geeigneten Spritzbilddaten können weiterverwendet werden. Andernfalls wird dagegen die Roboterbahn optimiert und die Ermittlung der am besten geeigneten Spritzbilddaten wird im Rahmen der Simulation in einer Schleife wiederholt, bis das simulierte Beschichtungsergebnis akzeptabel ist.

Bei der Optimierung der Roboterbahn können beispielsweise folgende Optimierungsmaßnahmen durchgeführt werden:
- Anpassung des Bahnverlaufs, z.B. Veränderung der Polygonzüge, die den Bahnverlauf definieren,
- Anpassung der Bahnabstände,
- Verkürzen oder Verlängern von Bahnen (z.B. an Kanten),
- Einführung von zusätzlichen Bahnen,
- Entfernung von Bahnen,
- Anpassung der Orientierung der Applikatorachse auf der Roboterbahn,
- Anpassung der Bahngeschwindigkeit,
- Veränderung von Einschaltpunkten oder Ausschaltpunkten auf der Roboterbahn, insbesondere an Kanten, Bahnumkehrpunkten, Schnittstellen von Lackierbereichen verschiedener Lackierroboter ("Lackiermodulstöße"),
- Optimierung durch Brush-Parametrierung hinsichtlich der Sprühstrahlbreite bzw. -durchmesser, Sprühstrahlform und Skalierung der Lackausflussrate und durch Einfügen oder Entfernen von Brush-Nummern mit der dazugehörigen Brush-Parametrierung.

Bei der Simulation zur Ermittlung der geeigneten Spritzbilddaten werden vorzugsweise auch Eigenschaften des Zerstäubers und/oder des Glockenteller-Lenkluftring-Systems berücksichtigt, insbesondere hinsichtlich möglicher Lackausflussraten und erreichbarer Spritzbildbreiten.

Im Rahmen der Simulation können jedoch auch andere Daten optimiert werden als die Spritzbilddaten. Beispielsweise können auch die Roboterbahnverläufe und die Ein-/Ausschaltpunkte des Lackflusses optimiert werden.

Das erfindungsgemäße Programmierverfahren sieht zwar ebenfalls eine Simulation des Beschichtungsergebnisses vor, wie es auch bei dem eingangs beschriebenen Stand der Technik der Fall ist. Bei dem erfindungsgemäßen Beschichtungsverfahren erfolgt jedoch keine physikalische Simulation, die als solche wesentlich aufwändiger ist. Vielmehr geht die erfindungsgemäße Simulation von den Spritzbilddaten und den dadurch definierten Schichtdickenprofilen aus, so dass die erfindungsgemäße Simulation wesentlich einfacher ist und deshalb auch in einer praktikablen Rechenzeit erfolgen kann.

Es wurde bereits vorstehend erwähnt, dass nach der Simulation die geeigneten Spritzbilddaten (Brush-Kurven) in einem ersten Datensatz vorliegen. Diese Spritzbilddaten sind jedoch noch nicht zur Ansteuerung des Applikationsgeräts geeignet. Im Rahmen des erfindungsgemäßen Programmierverfahrens ist deshalb vorgesehen, dass aus den ermittelten geeigneten Spritzbilddaten entsprechende geeignete Applikationsparameter (z.B. Drehzahl des Rotationszerstäubers, Lackstrom, Lenkluftstrom, etc.) ermittelt werden, die im Praxisbetrieb geeignet sind, um die zuvor ermittelten geeigneten Spritzbilddaten zu realisieren, wenn das Applikationsgerät die vorgegebene Roboterbahn abfährt. Diese geeigneten Applikationsparameter werden dann in einem zweiten Datensatz gespeichert.

Anschließend kann dann die Beschichtungsanlage mit den auf diese Weise ermittelten Applikationsparametern betrieben werden. Im Betrieb mit den zuvor ermittelten Applikationsparametern entstehen dann in der Praxis die zuvor ermittelten geeigneten Spritzbilddaten, die anhand der Simulation als geeignet ermittelt wurden und zu einem akzeptablen Beschichtungsergebnis führen.

In einer Erfindungsvariante werden die geeigneten Spritzbilddaten im Rahmen der Simulation auf Betreiberseite bei dem Beschichtungsanlagenbetreiber ermittelt, was beispielsweise automatisch oder mit einem unterstützenden Benutzereingriff erfolgen kann. Der im Rahmen der Simulation ermittelte erste Datensatz mit den geeigneten Spritzbilddaten wird dann von der Betreiberseite an eine Herstellerseite der Beschichtungsanlage übertragen, beispielsweise an einen Dienstleister, der von dem Hersteller der Beschichtungsanlage beauftragt wurde. Dieser Dienstleister ermittelt dann anhand der von dem Beschichtungsanlagenbetreiber übertragenen geeigneten Spritzbilddaten anhand eines Kennfeldes die geeigneten Applikationsparameter und überträgt diese zurück an den Beschichtungsanlagenbetreiber, der die Beschichtungsanlage dann mit den übertragenen Applikationsparametern betreibt.

In einer anderen Erfindungsvariante erfolgt die Ermittlung der geeigneten Spritzbilddaten im Rahmen der Simulation ebenfalls auf Betreiberseite bei dem Beschichtungsanlagenbetreiber, insbesondere automatisch oder mit einem unterstützenden Benutzereingriff. Der Beschichtungsanlagenbetreiber erhält dann für die Ermittlung der geeigneten Applikationsparameter ein Kennfeld, das auf der Herstellerseite erstellt wird, beispielsweise durch einen Dienstleister, der von dem Hersteller der Beschichtungsanlage beauftragt wird. Beispielsweise kann der Beschichtungsanlagenbetreiber Beschichtungsdaten an den Dienstleister übertragen, die das zu verwendende Beschichtungsmittel spezifizieren. Der herstellerseitig beauftragte Dienstleister kann dann ein entsprechendes lackspezifisches Kennfeld auswählen oder erstellen und an den Beschichtungsanlagenbetreiber übertragen. Die Ermittlung der geeigneten Applikationsparameter aus den geeigneten Spritzbilddaten erfolgt dann betreiberseitig durch den Betreiber der Beschichtungsanlage anhand des Kennfeldes, das zuvor von der Herstellerseite übertragen wurde.

Es wurde bereits vorstehend erwähnt, dass der erste Datensatz die geeigneten Spritzbilddaten enthält, die in der Simulation zu einem akzeptablen Beschichtungsergebnis führen. Darüber hinaus kann der erste Datensatz mit den geeigneten Spritzbilddaten auch weitere Beschichtungsdaten enthalten. Beispielsweise sind an dieser Stelle folgende Beschichtungsdaten zu nennen, die in dem ersten Datensatz enthalten sein können:
- Die gewünschte Schichtdicke der Beschichtungsmittelschicht auf der Oberfläche des Bauteils. Hierbei handelt es sich vorzugsweise um die Schichtdicke im getrockneten Zustand im Gegensatz zu der Schichtdicke des nassen Lacks.
- Eine Beschichtungsmittelkennung zur Identifikation des Beschichtungsmittels und/oder von Eigenschaften des Beschichtungsmittels. Beispielsweise kann die Beschichtungsmittelkennung angeben, welchen Festkörperanteil das verwendete Beschichtungsmittel enthält, oder ob es sich um einen Basislack oder einen Klarlack handelt.
- Eine Applikationsgerätekennung zur Identifikation des Applikationsgerätes und/oder von Eigenschaften des Applikationsgerätes. Beispielsweise kann die Applikationsgerätekennung angeben, welcher Typ eines Rotationszerstäubers verwendet wird.
- Darüber hinaus können die Beschichtungsdaten auch eine Schichtinformation enthalten, um verschiedene Schichten in einer mehrschichtigen Beschichtung zu unterscheiden.
- Ein weiteres Beispiel für mögliche Beschichtungsdaten ist die Bahngeschwindigkeit des Farbauftreffpunkts entlang der Roboterbahn, die ebenfalls das Beschichtungsergebnis beeinflusst.

Bei der vorstehend bereits erwähnten Ermittlung der geeigneten Applikationsparameter werden dann vorzugsweise nicht nur die in dem ersten Datensatz enthaltenden Spritzbilddaten berücksichtigt, sondern auch die vorstehend erwähnten Beschichtungsdaten. Darüber hinaus können auch Referenzwerte für den Bahnabstand zwischen benachbarten Lackierbahnen, die Bahngeschwindigkeit, die Zielschichtdicke, den Festkörperanteil des Beschichtungsmittels und den Auftragswirkungsgrad des Applikationsgerätes berücksichtigt werden.

Es wurde bereits vorstehend erwähnt, dass im Rahmen der Simulation Roboterbahndaten berücksichtigt werden, wobei die Roboterbahndaten die Roboterbahn definieren, die von dem Farbauftreffpunkt des Applikationsgerätes im Beschichtungsbetrieb abgefahren werden soll. Diese Roboterbahndaten umfassen vorzugsweise folgende Daten:
- Räumlicher Verlauf der Roboterbahn,
- Bahngeschwindigkeit des Farbauftreffpunkts entlang der Roboterbahn,
- Bahnabstand zwischen seitlich benachbarten, seitlich überlappenden oder aneinander angrenzenden Bahnabschnitten der Roboterbahn,
- Ausrichtung des Applikationsgeräts,
- zeitlicher Verlauf des Farbauftreffpunkts entlang der Roboterbahn oder Geschwindigkeit des Farbauftreffpunkts entlang der Roboterbahn,
- Einschaltpunkte und/oder und Ausschaltpunkte für den Lackfluss, und/oder
- Aktive Brush-Nummer: Wo ist welche Brush-Nummer mit der dazugehörigen Brush-Parametrierung im Roboterbahnverlauf aktiv?

Darüber hinaus ist zu erwähnen, dass die Roboterbahn vorzugsweise in mehrere aufeinanderfolgende Bahnabschnitte unterteilt wird, die nacheinander von dem Farbauftreffpunkt des Applikationsgerätes abgefahren werden sollen. Die geeigneten Spritzbilddaten werden dann vorzugsweise für die einzelnen Bahnabschnitte der Roboterbahn individuell und spezifisch ermittelt. Darüber hinaus kann dann auch für die einzelnen Bahnabschnitte jeweils individuell und spezifisch ein Satz von geeigneten Applikationsparametern ermittelt werden.

Es wurde bereits vorstehend erwähnt, dass die Ermittlung der geeigneten Spritzbilddaten (Brush-Kurven) in einer Simulation erfolgt. In dem bevorzugten Ausführungsbeispiel der Erfindung umfasst diese Simulation mehrere Iterationsschritte, die nacheinander durchlaufen werden und jeweils Optimierungsschleifen enthalten.

In einem ersten Optimierungsschritt erfolgt vorzugsweise eine Vorgabe von Standardwerten für das Spritzbild und den Beschichtungsmittelstrom, insbesondere als prozentualer, relativer oder virtueller Wert (Referenz-Brush). Diese Standardwerte dienen lediglich als Startwerte für die Simulation des Beschichtungsergebnisses. Im Rahmen der anschließenden Simulation auf der Grundlage der vorgegebenen Standardwerte wird dann vorzugsweise die Schichtdickenverteilung ermittelt, wobei Abweichungen der simulierten Schichtdickenverteilung gegenüber einer Zielvorgabe ermittelt werden. Hinsichtlich der Schichtdickenhomogenität auf großen Bauteilflächen können bereits in diesem ersten Optimierungsschritt die Roboterbahndaten optimiert werden.

Die vorstehend erwähnten Startwerte für die Simulation können beispielsweise einen Referenzwert für den Bahnabstand zwischen Mittelachsen von unmittelbar aneinander angrenzenden Beschichtungsbahnen umfassen. So werden bei einer Lackierung von Kraftfahrzeugkarosserien üblicherweise Lackierbahnen auf die Kraftfahrzeugkarosserie aufgetragen, wobei die Lackierbahnen parallel zueinander verlaufen und seitlich überlappen. Die Startwerte für die Simulation können deshalb auch die seitliche Überlappung der unmittelbar aneinander angrenzenden Beschichtungsbahnen definieren. Darüber hinaus können die Startwerte für die Simulation auch einen Referenzwert für den Beschichtungsmittelstrom umfassen.

In einem zweiten Optimierungsschritt erfolgt dann vorzugsweise eine Prüfung der Schichtdickenhomogenität an einfachen Modulstößen. So wird die Bauteiloberfläche eines zu lackierenden Bauteils üblicherweise in Lackiermodule unterteilt, die nacheinander lackiert werden. Beispielsweise kann es sich bei den Lackiermodulen um die Motorhaube, das Dach, den Kofferraumdeckel, die Kotflügel und die Türen einer Kraftfahrzeugkarosserie handeln, die nacheinander lackiert werden. Die benachbarten Module stoßen hierbei an Modulgrenzen ein aneinander an, wobei einfache Modulstöße im Sinne der Erfindung solche Grenzen zwischen benachbarten Modulen sind, an denen genau zwei benachbarte Beschichtungsmodule aneinander angrenzen. Beispielsweise können bei einer Kraftfahrzeugkarosserie die vordere Seitentür und die hintere Seitentür jeweils ein Lackiermodulbilden, so dass die Grenze zwischen Vordertür und Seitentür einen einfachen Modulstoß bildet. Die Stoßstellen zwischen drei oder mehr aneinander angrenzenden Beschichtungsmodulen werden dagegen im Rahmen der Erfindung als komplexe Modulstöße bezeichnet. Beispielsweise tritt ein solcher komplexer Modulstoß an der Stelle einer Kraftfahrzeugkarosserie auf, an der die Motorhaube, der Kotflügel, die Vordertür und die A-Säule aneinander angrenzen.

In dem zweiten Optimierungsschritt wird also zunächst die Schichtdickenhomogenität an den vorstehend beschriebenen einfachen Modulstößen ermittelt und mit einem Zielwert verglichen. Im Rahmen des zweiten Optimierungsschrittes kann dann die Roboterbahn optimiert werden, um die Schichtdickenhomogenität an den einfachen Modulstößen zu optimieren. Diese Optimierung kann in mehreren Iterationsschleifen erfolgen, die nacheinander durchlaufen werden, bis eine akzeptable Verbesserung der Schichtdickenhomogenität erreicht ist.

In einem dritten Optimierungsschritt kann dann die Schichtdickenhomogenität an den vorstehend erwähnten komplexen Modulstößen optimiert werden. Auch hierbei kann die Roboterbahn im Rahmen des dritten Optimierungsschrittes mehrfach angepasst werden, um die Schichtdickenhomogenität an den komplexen Modulstößen zu optimieren. Diese Optimierung kann im Rahmen des dritten Optimierungsschrittes in mehreren Optimierungsschleifen erfolgen, die nacheinander durchlaufen werden, bis eine akzeptable Schichtdickenhomogenität an den komplexen Modulstößen erreicht ist.

In einem vierten Optimierungsschritt kann die Schichtdickenhomogenität wieder an einfachen und/oder komplexen Modulstößen optimiert werden. Allerdings wird in diesem vierten Optimierungsschritt nicht die Roboterbahn angepasst, sondern die Spritzbilddaten (Brush-Kurven) und/oder der Beschichtungsmittelstrom. Auch die Optimierung im Rahmen des vierten Optimierungsschrittes kann in mehreren Optimierungsschleifen erfolgen, die nacheinander durchlaufen werden, bis die Simulation zu einem akzeptablen Beschichtungsergebnis an den einfachen bzw. komplexen Modulstößen führt.

Schließlich kann in einem fünften Optimierungsschritt eine Optimierung der Schichtdickenhomogenität an Bauteilrändern des zu beschichtenden Bauteils führen. Beispielsweise kann es sich bei den Bauteilrändern um die Ränder einer zu beschichtenden Motorhaube oder um die Ränder einer zu beschichtenden Tür einer Kraftfahrzeugkarosserie handeln. Im Rahmen des fünften Optimierungsschritts wird die Schichtdickenhomogenität an den Bauteilrändern simuliert und mit einem vorgegebenen Zielwert für die Schichtdickenhomogenität verglichen. Dabei können dann die Roboterbahn, die Spritzbilddaten und/oder der Beschichtungsmittelstrom angepasst werden, bis die Simulation zu einem akzeptablen Beschichtungsergebnis führt. Im Rahmen des fünften Optimierungsschrittes können also beispielsweise folgende Anpassungen vorgenommen werden:
- Optimierung der Roboterbahn: Anpassung des Bahnverlaufs, z.B. allgemeine Veränderung der Polygonzüge oder Anpassung hinsichtlich Bahnabständen, Verkürzen und Verlängern von Bahnen (z.B. an Kanten), zusätzliche Bahnen, weniger Bahnen, Anpassung der Orientierung der Glockentellerachse, Anpassung der Geschwindigkeit,
- Optimierung durch Veränderung von Einschaltpunkten und/oder Ausschaltpunkten des Lackflusses (GUN ON / GUN OFF), insbesondere an Kanten, Bahnumkehrpunkten, Schnittstellen von Lackierbereichen verschiedener Roboter (Lackiermodulstöße),
- Optimierung durch Brush-Parametrierung hinsichtlich Sprühstrahlbreite bzw. Sprühstrahldurchmesser, Sprühstrahlform und Skalierung der Lackausflussrate und durch Einfügen oder Entfernen von Brush-Nummern mit der dazugehörigen Brush-Parametrierung.

Hierbei ist zu erwähnen, dass die vorstehend genannten Anpassungen ("Stellschrauben") nicht nur im Rahmen des fünften Optimierungsschrittes möglich sind, sondern auch ganz allgemein. Auch die Optimierung im Rahmen des fünften Optimierungsschritts kann in mehreren Optimierungsschleifen erfolgen, die nacheinander durchlaufen werden, bis die Simulation zu einem akzeptablen Beschichtungsergebnis an den Bauteilrändern führt.

Im Rahmen der Simulation des Beschichtungsergebnisses kann das Beschichtungsergebnis auch auf der Betreiberseite grafisch auf einem Bildschirm dargestellt werden. Beispielsweise kann hierbei auf einem Bildschirm das zu beschichtende Bauteil perspektivisch als Modell dargestellt werden. Hierbei kann die Oberfläche des dargestellten Modells des zu beschichtenden Bauteils ortsabhängig eingefärbt sein, wobei die Einfärbung der Bauteiloberfläche auf dem Bildschirm beispielsweise die lokale Abweichung zwischen der simulierten Schichtdicke einerseits und einem vorgegebenen Sollwert für die Schichtdicke andererseits wiedergibt. Diese Visualisierung des simulierten Beschichtungsergebnisses auf einem Bildschirm ermöglicht dem Programmierer eine schnelle und intuitive Übersicht über das simulierte Beschichtungsergebnis.

Es wurde bereits vorstehend erwähnt, dass nach der Ermittlung der geeigneten Spritzbilddaten (Brush-Kurven) im Rahmen der Simulation die geeigneten Applikationsparameter ermittelt werden, die zur Realisierung der vorgegebenen Spritzbilddaten geeignet sind. Diese Umrechnung erfolgt anhand eines mehrdimensionalen Kennfeldes, das für ein bestimmtes Beschichtungsmittel beispielsweise mehrere der folgenden Größen miteinander verknüpfen kann:
- Breite des Schichtdickenprofils, insbesondere als SB50-Wert des Schichtdickenprofils. Der SB50-Wert bezeichnet hierbei die Breite des Schichtdickenprofils, innerhalb derer die Schichtdicke mindestens 50 % des Maximalwerts der Schichtdicke beträgt.
- Lenkluftstrom des Applikationsgeräts (z.B. Rotationszerstäuber).
- Beschichtungsmittelstrom des Applikationsgeräts (z.B. Rotationszerstäuber).
- Drehzahl des Rotationszerstäubers, der als Applikationsgerät eingesetzt wird.
- Hochspannung einer elektrostatischen Beschichtungsmittelaufladung.
- Bahngeschwindigkeit des Applikationsgeräts (z.B. Rotationszerstäuber) entlang der Roboterbahn.
- Beschichtungsabstand zwischen dem Applikationsgerät und der Oberfläche des zu beschichtenden Bauteils.

Es wurde bereits vorstehend erwähnt, dass Roboterbahndaten vorgegeben werden, die den Verlauf der Roboterbahn während des eigentlich Beschichtungsbetriebs bestimmen. Diese Roboterbahndaten können beispielsweise auf der Betreiberseite anhand der Geometriedaten des zu beschichtenden Bauteils vorgegeben werden. Es besteht jedoch alternativ auch die Möglichkeit, dass die Roboterbahndaten herstellerseitig bereitgestellt werden und dann von dem Beschichtungsanlagenbetreiber in Dateiform eingelesen werden.

Das gleiche gilt auch für die Geometriedaten des zu beschichtenden Bauteils, die beispielsweise auf der Betreiberseite durch den Beschichtungsanlagenbetreiber im Rahmen des Messvorgangs ermittelt werden können. Alternativ ist es jedoch möglich, dass die Geometriedaten herstellerseitig bereitgestellt werden.

In der Praxis hat sich außerdem gezeigt, dass es hinsichtlich der Simulationsmethode und der Spritzbilddaten vorteilhaft ist, auch den Sprühstrahlverzug, beispielsweise an Kanten, A-Säule usw., mindestens teilweise umgehen zu können. Spezielle Lackiersituationen und -effekte, z.B. Luftströmung in der Kabine, Luftströmung um den Zerstäuber und um das Werkstück, Hochspannungseinflüsse etc., werden deshalb in der Simulation - sofern erforderlich - automatisch berücksichtigt, z.B. an Werkstückkanten, Aussparungen für Schiebedach oder komplexen Werkstück-Geometrien.

Weiterhin ist zu erwähnen, dass die Erfindung nicht nur Schutz beansprucht für das vorstehende beschriebene erfindungsgemäße Programmierverfahren. Vielmehr beansprucht die Erfindung auch Schutz für eine entsprechend angepasste Beschichtungsanlage, die zur Ausführung des erfindungsgemäßen Programmierverfahrens geeignet ist.

Die erfindungsgemäße Beschichtungsanlage umfasst zunächst in Übereinstimmung mit dem Stand der Technik mindestens einen Beschichtungsroboter, mindestens ein Applikationsgerät (z.B. Rotationszerstäuber) und eine Steuerung, die das Applikationsgerät und den Beschichtungsroboter ansteuert. Die Steuerung ist dann bei der erfindungsgemäßen Beschichtungsanlage so ausgebildet, dass das erfindungsgemäße Programmierverfahren ausgeführt wird.

Beispielsweise kann in der Steuerung das vorstehend erwähnte Kennfeld gespeichert sein, um aus den geeigneten Spritzbilddaten die geeigneten Applikationsparameter zu ermitteln.

Darüber hinaus weist die erfindungsgemäße Beschichtungsanlage vorzugsweise eine Datenschnittstelle auf, um die Spritzbilddaten und oder die Beschichtungsdaten an den Beschichtungsanlagenhersteller oder einen von ihm beauftragten Dienstleister zu übertragen und das zugehörige Kennfeld zur Ermittlung der geeigneten Applikationsparameter von dem Beschichtungsanlagenhersteller bzw. von dem Dienstleister zu empfangen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.
Figuren 1A, 1B zeigen ein Flussdiagramm zur Verdeutlichung des erfindungsgemäßen Programmierverfahrens.
Figur 2 zeigt ein Flussdiagramm zur Verdeutlichung der Simulation des Beschichtungsergebnisses im Rahmen des erfindungsgemäßen Programmierverfahrens.
Figur 3 zeigt exemplarisch ein Schichtdickenprofil, das von einem Rotationszerstäuber erzeugt wird.
Figur 4 zeigt verschiedene Schichtdickenprofile bei einer Variation des Lackstroms.
Figur 5 zeigt ein Beispiel für ein Kennfeld zur Verknüpfung von Spritzbilddaten einerseits und Applikationsparametern andererseits.
Figur 6 zeigt eine schematische Darstellung einer erfindungsgemäßen Lackieranlage.
Figur 7 zeigt eine Abwandlung von Figur 1A.

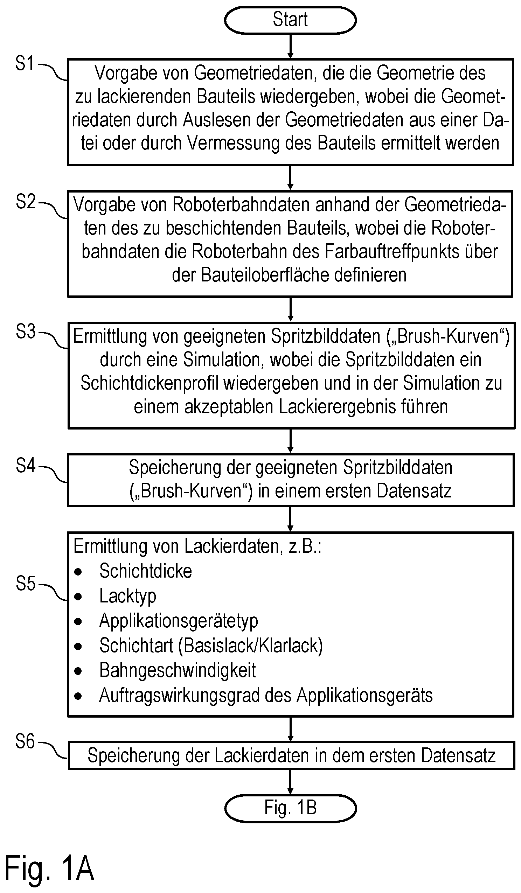

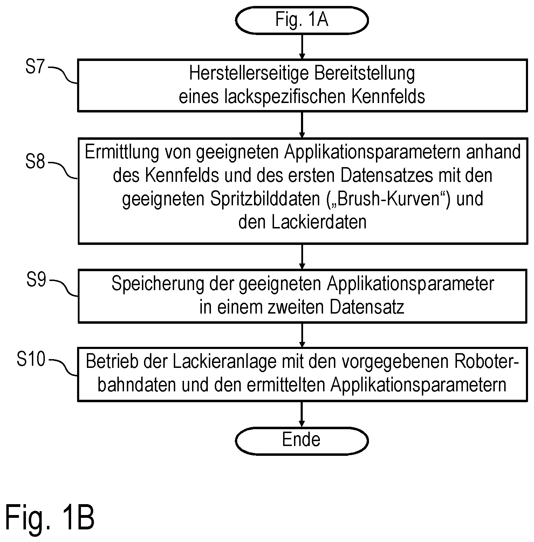

Im Folgenden wird nun das Flussdiagramm gemäß den Figuren 1A und 1B beschrieben, welches das erfindungsgemäße Programmierverfahren verdeutlicht.

In einem ersten Schritt S1 werden zunächst Geometriedaten vorgegeben, die die Geometrie des zu lackierenden Bauteils (z.B. Kraftfahrzeugkarosseriebauteil) wiedergeben. Die Geometriedaten können beispielsweise in Dateiform bereitgestellt und einfach ausgelesen werden. Alternativ besteht jedoch auch die Möglichkeit, dass die Geometriedaten anhand eines realen Bauteils vermessen werden.

In einem zweiten Schritt S2 werden dann Roboterbahndaten vorgegeben, wobei die Roboterbahndaten die Bewegungsbahn des Farbauftreffpunkts des verwendeten Applikationsgeräts auf der Bauteiloberfläche definieren. Die Roboterbahndaten werden hierbei anhand der Geometriedaten des zu beschichtenden Bauteils ermittelt. Hierbei werden üblicherweise Lackierrichtlinien berücksichtigt, die beispielsweise Vorgaben enthalten können hinsichtlich des seitlichen Abstands benachbarter Lackierbahnen und bezüglich der seitlichen Überlappung der benachbarten Lackierbahnen.

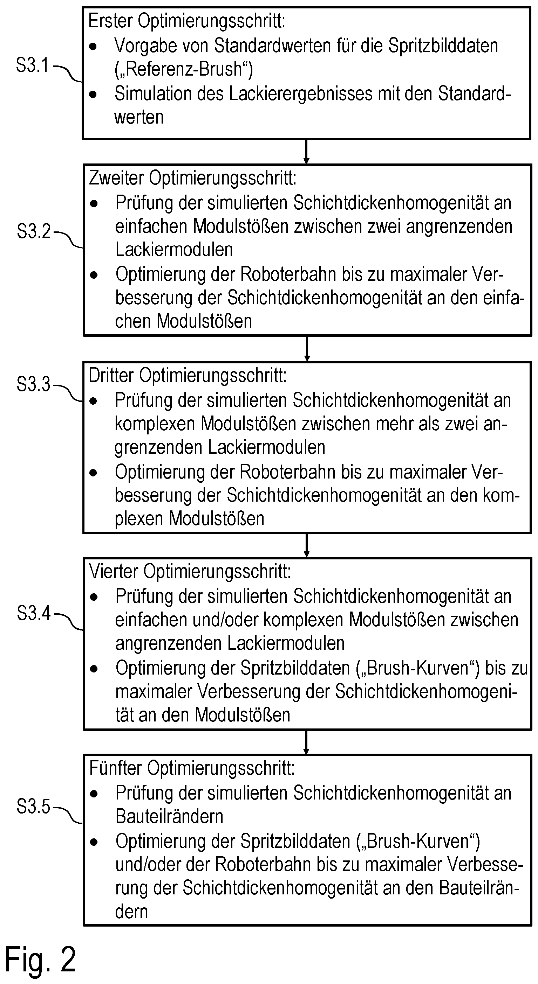

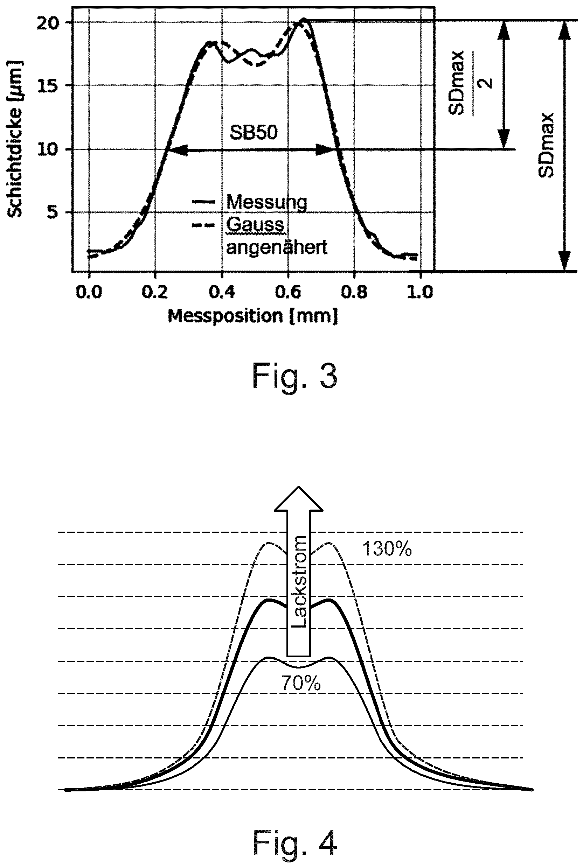

In einem weiteren Schritt S3 werden dann im Rahmen einer Simulation geeignete Spritzbilddaten (Brush-Kurven) ermittelt, wobei die Spritzbilddaten ein Schichtdickenprofil wiedergeben und in der Simulation zu einem akzeptablen Lackierergebnis führen. So zeigt beispielsweise Figur 3 ein Schichtdickenprofil eines Rotationszerstäubers mit mehreren Spritzbilddaten, die das Schichtdickenprofil kennzeichnen. Der wichtigste Wert für die Beschreibung des Schichtdickenprofils ist hierbei der SB50-Wert, der die Breite des Schichtdickenprofils wiedergibt, innerhalb derer die Schichtdicke mindestens 50 % der Maximalschichtdicke SD_{MAX} beträgt. Die Simulation in dem Schritt S3 wird später noch detailliert anhand von Figur 2 beschrieben.

Die im Rahmen der Simulation ermittelten akzeptablen Spritzbilddaten werden dann in einem Schritt S4 in einem ersten Datensatz gespeichert.

In einem weiteren Schritt S5 werden dann zusätzlich Lackierdaten ermittelt, wie beispielsweise die gewünschte Schichtdicke, der Lacktyp, der Applikationsgerätetyp, die Schichtart (Basislack/Klarlack), die Bahngeschwindigkeit und der Auftragswirkungsgrad des Applikationsgeräts. Diese Lackierdaten werden dann in einem Schritt S6 zusammen mit den Spritzbilddaten in dem ersten Datensatz gespeichert.

In einem Schritt S7 wird dann herstellerseitig ein lackspezifisches Kennfeld bereitgestellt, damit aus den geeigneten Spritzbilddaten die zugehörigen Applikationsparameter ermittelt werden können, die in der Praxis zur Realisierung der geeigneten Spritzbilddaten führen.

Im nächsten Schritt S8 wird das Kennfeld dann verwendet, um aus den geeigneten Spritzbilddaten und den Lackierdaten die geeigneten Applikationsparameter zu ermitteln. Beispielsweise können die Applikationsparameter den Lenkluftstrom eines Rotationszerstäubers, die Hochspannungsaufladung, und den Lackstrom umfassen.

Die geeigneten Applikationsparameter werden dann in einem Schritt S9 in einem zweiten Datensatz gespeichert.

Im nächsten Schritt S10 erfolgt dann der Betrieb der Lackieranlage mit den vorgegebenen Roboterbahndaten und den ermittelten Applikationsparametern. Bei einem optimal berechneten Kennfeld führt der Betrieb der Lackieranlage mit den aus dem Kennfeld ausgelesenen Applikationsparametern dann zu den Spritzbilddaten, die zuvor im Rahmen der Simulation ermittelt wurden, so dass eine gute Übereinstimmung zwischen Simulation und realem Lackierbetrieb erreicht werden kann.

Hierbei ist zu erwähnen, dass das vorstehend beschriebene Programmierverfahren die Ermittlung der Spritzbilddaten und der zugehörigen Applikationsparameter individuell für verschiedene Bahnabschnitte auf der Roboterbahn durchführen kann. Dies bedeutet, dass die Applikationsparameter entlang der Roboterbahn nicht konstant sein müssen. Vielmehr können die Applikationsparameter entlang der Roboterbahn variiert werden, um ein gutes Beschichtungsergebnis zu erzielen.

Im Folgenden wird nun die Simulation gemäß dem Schritt S3 in Figur 1A näher beschrieben, wobei auf das Flussdiagramm gemäß Figur 2 Bezug genommen wird.

In einem ersten Schritt S3.1 der Simulation werden zunächst Standardwerte für die Spritzbilddaten vorgegeben, die auch als Referenz-Brush bezeichnet werden können. Anschließend erfolgt dann eine Simulation des Beschichtungsergebnisses auf der Grundlage der vorgegebenen Standardwerte.

In einem zweiten Optimierungsschritt S3.2 wird dann die Schichtdickenhomogenität an einfachen Modulstößen zwischen zwei aneinander angrenzenden Modulen geprüft. Der Begriff von einfachen Modulstößen bezeichnet im Rahmen der Erfindung die Grenzen zwischen genau zwei aneinander angrenzenden Lackiermodulen. Beispielsweise bildet die Grenze zwischen vorderer Seitentür und hinterer Seitentür einen solchen einfachen Modulstoß. Die Roboterbahn wird dann im Rahmen der Simulation optimiert, bis eine maximale Verbesserung der Schichtdickenhomogenität an den einfachen Modulstößen erzielt ist. Der zweite Optimierungsschritt S3.2 kann also mehrere Iterationsschleifen umfassen, die nacheinander durchlaufen werden. Wichtig ist hierbei, dass die Schichtdickenhomogenität an den einfachen Modulstößen ausgewertet wird und zum Optimieren der Roboterbahn herangezogen wird.

In einem dritten Optimierungsschritt S3.3 kann dann die Schichtdickenhomogenität an komplexen Modulstößen zwischen mehr als zwei aneinandergrenzenden Lackiermodulen geprüft werden. Der Begriff von komplexen Modulstößen bezeichnet hierbei die Grenzen zwischen mehr als zwei angrenzenden Lackiermodulen. Beispielsweise bildet die Grenze zwischen dem Kotflügel, der Motorhaube, der vorderen Seitentür und der A-Säule einer Kraftfahrzeugkarosserie einen solchen komplexen Modulstoß. In dem dritten Optimierungsschritt S3.3 wird dann wieder die Roboterbahn iterativ optimiert, bis an den komplexen Modulstößen eine maximale Verbesserung der Schichtdickenhomogenität erreicht ist.

In einem vierten Optimierungsschritt S3.4 wird dann wieder die Schichtdickenhomogenität an den komplexen und oder einfachen Modulstößen ermittelt und als Optimierungskriterium herangezogen. Allerdings wird dann nicht die Roboterbahn optimiert, sondern die Spritzbilddaten (Brush-Kurven), bis eine maximale Verbesserung der Schichtdickenhomogenität an den einfachen bzw. komplexen Modulstößen erreicht ist.

In einem fünften Optimierungsschritt S3.5 wird dann die Schichtdickenhomogenität an den Bauteilrändern geprüft und als Optimierungskriterium herangezogen. Beispielsweise kann die Schichtdickenhomogenität an den Rändern einer Motorhaube geprüft und berücksichtigt werden. Im Rahmen der Optimierung können dann die Spritzbilddaten und/oder die Roboterbahn optimiert werden, bis eine maximale Verbesserung der Schichtdickenhomogenität an den Bauteilrändern erreicht ist. Auch hierbei kann die Optimierung mehrere Iterationsschleifen umfassen, die nacheinander durchlaufen werden.

Figur 3 zeigt ein Schichtdickenprofil, wie es typischerweise von einem Rotationszerstäuber erzeugt wird.

Figur 4 zeigt ein entsprechendes Schichtdickenprofil eines Rotationszerstäubers bei einer Änderung des Lackstroms von 70 % auf 130 %.

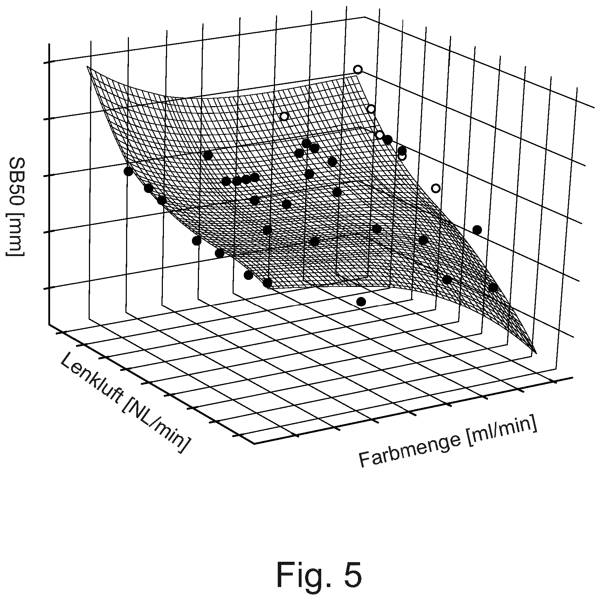

Figur 5 zeigt ein Kennfeld, das im Rahmen der Erfindung verwendet werden kann, um aus den Spritzbilddaten geeignete Applikationsparameter zu ermitteln. Bei den Spritzbilddaten handelt sich in dem Kennfeld gemäß Figur 5 um den SB 50-Wert, während die Applikationsparameter hierbei der Lenkluftstrom und die Farbmenge sind. Im Rahmen der Erfindung können jedoch auch mehrdimensionale Kennfelder verwendet werden, die eine größere Zahl von Spritzbilddaten bzw. Applikationsparametern miteinander verknüpfen.

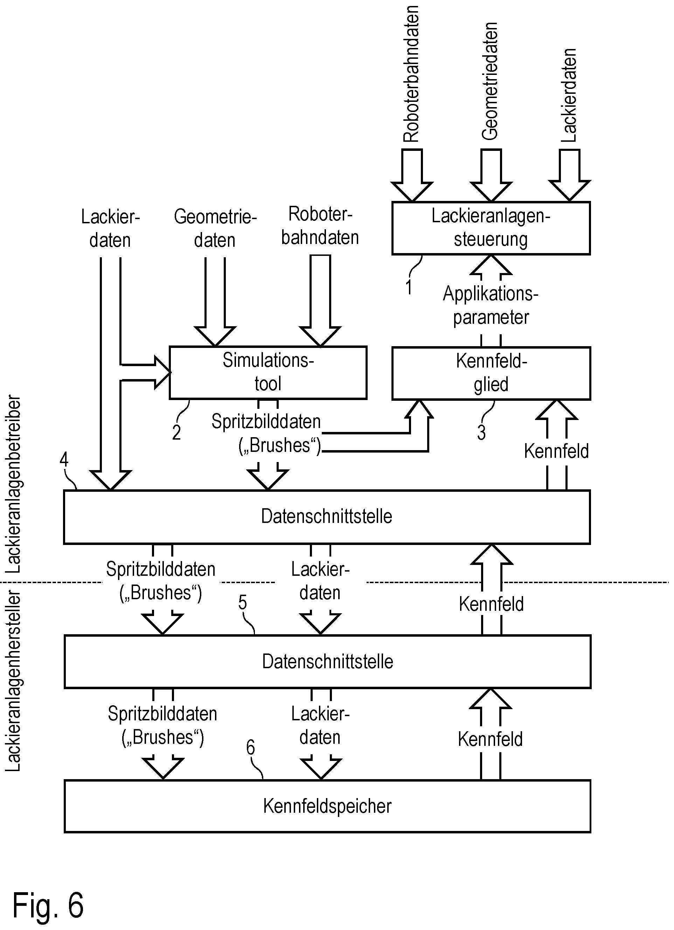

Figur 6 zeigt in stark vereinfachter und thematisierter Form eine erfindungsgemäße Lackieranlage, die zur Ausführung des erfindungsgemäßen Programmierverfahrens geeignet ist.

So umfasst die erfindungsgemäße Lackieranlage zunächst in Übereinstimmung mit den bekannten Lackieranlagen eine Lackieranlagensteuerung 1, die im Betrieb einen Lackierroboter und ein Applikationsgerät (z.B. Rotationszerstäuber) mit bestimmten Applikationsparametern ansteuert. Die Lackieranlagensteuerung 1 erhält als Eingangsgrößen Roboterbahndaten, die den Verlauf einer Roboterbahn vorgeben, wobei die Roboterbahndaten gemäß Lackierrichtlinien vorgegeben werden können.

Darüber hinaus erhält die Lackieranlagensteuerung 1 Geometriedaten, die die Geometrie des zu beschichtenden Bauteils wiedergeben.

Schließlich erhält die Lackieranlagensteuerung 1 noch Lackierdaten, die beispielsweise den Typ des verwendeten Lacks wiedergeben.

Im Lackierbetrieb steuert die Lackieranlagensteuerung 1 dann den Lackierroboter und das Applikationsgerät entsprechend an, wobei Applikationsparameter verwendet werden, die mit dem erfindungsgemäßen Programmierverfahren festgelegt werden.

Hierzu ist ein Simulations-Tool 2 vorgesehen, das ebenfalls die Lackierdaten, die Geometriedaten und die Roboterbahndaten erhält und im Rahmen einer Simulation geeignete Spritzbilddaten ermittelt, die in der Simulation zu einem akzeptablen Beschichtungsergebnis führen, wie vorstehend beschrieben wurde.

Darüber hinaus weist die Lackieranlage ein Kennfeldglied 3 auf, um die Applikationsparameter für die Lackieranlagensteuerung 1 zu bestimmen, wie noch detailliert beschrieben wird.

Die erfindungsgemäße Lackieranlage weist nun zusätzlich eine Datenschnittstelle 4 auf, die dazu dient, die geeigneten Spritzbilddaten und die Lackierdaten an den Lackieranlagenhersteller oder einen von diesem beauftragten Dienstleister zu übertragen, der hierzu ebenfalls eine Datenschnittstelle 5 aufweist. Auf der Herstellerseite kann dann aus den übertragenen Lackierdaten und den übertragenen Spritzbilddaten ein geeignetes Kennfeld aus einem Kennfeldspeicher 6 ausgelesen und an den Lackieranlagenbetreiber übertragen werden, der das geeignete Kennfeld dann in den Kennfeldspeicher 3 speichert. Das in dem Kennfeldspeicher 3 gespeicherte Kennfeld ermöglicht dann eine Ermittlung der geeigneten Applikationsparameter aus den simulierten Spritzbilddaten.

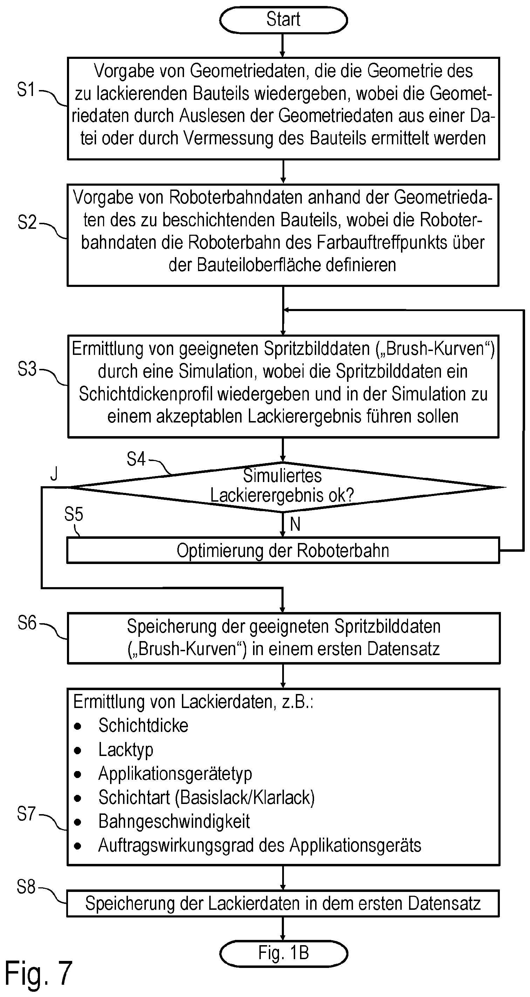

Figur 7 zeigt eine Abwandlung des Flussdiagramms gemäß Figur 1A, so dass zur Vermeidung von Wiederholungen zunächst auf die vorstehende Beschreibung zu Figur 1A verwiesen wird.

Eine Besonderheit dieser Abwandlung besteht in den Verfahrensschritten S4 und S5, die in den Verfahrensablauf eingeschoben sind. So geht das Verfahren gemäß Figur 1A davon aus, dass die Roboterbahn fest vorgegeben wird und im Rahmen der Simulation nicht verändert wird. Es kann jedoch vorkommen, dass bei einer bestimmten, fest vorgegebenen Roboterbahn auch die bestmöglich geeigneten Spritzbilddaten ("Brush-Kurven") nicht zu einem akzeptablen Beschichtungsergebnis führen. Dies kann beispielsweise dann der Fall sein, wenn die vorgegebene Roboterbahn beschichtungstechnisch besonders anspruchsvoll ist. In solchen Fällen ist es sinnvoll, auch die Roboterbahn zu optimieren.

In dem Schritt S4 wird deshalb nach der Ermittlung der bestmöglich geeigneten Spritzbilddaten geprüft, ob das simulierte Lackierergebnis akzeptabel ist. Falls dies der Fall ist, so kann das Verfahren mit dem Schritt S6 fortgeführt werden, wie vorstehend unter Bezugnahme auf Figur 1A beschrieben wurde.

Falls das simulierte Lackierergebnis dagegen auch mit den bestmöglich geeigneten Spritzbilddaten nicht akzeptabel ist, so erfolgt in einem Schritt S5 eine Optimierung der Roboterbahn und die Schritte S3, S4 und S5 werden so lange wiederholt, bis die Simulation mit den bestmöglich geeigneten Spritzbilddaten und der optimierten Roboterbahn zu einem akzeptablen Beschichtungsergebnis führt. Falls dies der Fall ist, so kann zu dem Schritt S6 übergegangen werden, wie vorstehend unter Bezugnahme auf Figur 1A bereits beschrieben wurde.

### Bezugszeichenliste

- 1: Lackieranlagensteuerung
- 2: Simulationstool
- 3: Kennfeldglied
- 4: Datenschnittstelle
- 5: Datenschnittstelle
- 6: Kennfeldspeicher

## Patentansprüche

1. Verfahren zur Programmierung einer programmgesteuerten Beschichtungsanlage mit einem Beschichtungsroboter und einem Applikationsgerät zur Beschichtung von Bauteilen, insbesondere zur Programmierung einer Lackieranlage mit einem Lackierroboter zur Lackierung von Kraftfahrzeugkarosseriebauteilen, mit den folgenden Schritten (S1-S3):
a) Vorgabe oder Ermittlung von Geometriedaten, wobei die Geometriedaten die Geometrie des zu beschichtenden Bauteils wiedergeben (S1),
b) Vorgabe von Roboterbahndaten (S2),
b1) wobei die Roboterbahndaten eine Roboterbahn definieren, die von einem Farbauftreffpunkt des von dem Beschichtungsroboter geführten Applikationsgeräts im Beschichtungsbetrieb abgefahren werden soll, und
b2) wobei die Roboterbahn anhand der vorgegebenen Geometriedaten des zu beschichtenden Bauteils festgelegt wird,
c) Ermittlung von geeigneten Spritzbilddaten (S3),
c1) wobei die Spritzbilddaten ein Schichtdickenprofil wiedergeben, insbesondere ein dreidimensionales Schichtdickenprofil, das im realen Beschichtungsbetrieb von dem Applikationsgerät auf der Oberfläche des Bauteils um den Farbauftreffpunkt herum erzeugt wird, und
c2) wobei die ermittelten Spritzbilddaten dazu bestimmt sind, um im realen Beschichtungsbetrieb bei der Beschichtung des Bauteils entlang der vorgegebenen Roboterbahn ein akzeptables Beschichtungsergebnis zu erzielen,
c3) wobei die geeigneten Spritzbilddaten durch eine Simulation ermittelt werden, welche die vorgegebenen Roboterbahndaten und die Geometriedaten des zu beschichtenden Bauteils berücksichtigt, wobei die Ermittlung der Applikationsparameter zum Betrieb des Applikationsgeräts nach der Simulation erfolgt,
c4) wobei die Spritzbilddaten bei der Simulation so lange optimiert werden, bis ein akzeptables Beschichtungsergebnis simuliert wird, und
c5) wobei die geeigneten Spritzbilddaten in einem ersten Datensatz gespeichert werden (S4),
**gekennzeichnet durch** folgende Schritte:
d) Ermittlung von geeigneten Applikationsparametern zum Betrieb des Applikationsgeräts (S8),
d1) wobei die geeigneten Applikationsparameter aus den in dem ersten Datensatz enthaltenen Spritzbilddaten anhand eines Kennfelds ermittelt werden,
d2) wobei die ermittelten geeigneten Applikationsparameter im realen Betrieb des Applikationsgeräts beim Abfahren der Roboterbahn zu den geeigneten Spritzbilddaten führen, und
d3) wobei die geeigneten Applikationsparameter in einem zweiten Datensatz gespeichert werden (S9), und
e) Betrieb der Beschichtungsanlage (S10),
e1) wobei der Beschichtungsroboter entsprechend den Roboterbahndaten angesteuert wird, so dass der Farbauftreffpunkt des Applikationsgeräts die vorgegebene Roboterbahn auf der Oberfläche des zu beschichtenden Bauteils abfährt, und
e2) wobei das Applikationsgerät mit den geeigneten Applikationsparametern angesteuert wird, die in dem zweiten Datensatz enthalten sind.

2. Verfahren nach einem Anspruch 1, **dadurch gekennzeichnet,**
a) **dass** die Ermittlung der geeigneten Spritzbilddaten im Rahmen der Simulation auf Betreiberseite bei dem Beschichtungsanlagenbetreiber erfolgt, insbesondere automatisch oder mit einem unterstützenden Benutzereingriff,
b) **dass** der im Rahmen der Simulation ermittelte erste Datensatz mit den geeigneten Spritzbilddaten von der Betreiberseite an eine Herstellerseite der Beschichtungsanlage übertragen wird, insbesondere bei einem Dienstleister,
c) **dass** die Ermittlung der geeigneten Applikationsparameter anhand des Kennfeldes und der geeigneten Spritzbilddaten auf der Herstellerseite erfolgt, insbesondere durch den Dienstleister, und
d) **dass** der zweite Datensatz mit den geeigneten Applikationsparametern von der Herstellerseite an die Betreiberseite übertragen wird.

3. Verfahren nach einem der vorhergehenden Ansprüche, **dadurch gekennzeichnet,**
a) **dass** die Ermittlung der geeigneten Spritzbilddaten im Rahmen der Simulation auf Betreiberseite bei dem Beschichtungsanlagenbetreiber erfolgt, insbesondere automatisch oder mit einem unterstützenden Benutzereingriff,
b) **dass** das Kennfeld zur Ermittlung der geeigneten Applikationsparameter auf der Herstellerseite erstellt wird, insbesondere durch den Dienstleister,
c) **dass** das Kennfeld zur Ermittlung der geeigneten Applikationsparameter von dem Dienstleister an die Betreiberseite übertragen wird, und
d) **dass** die Ermittlung der geeigneten Applikationsparameter anhand des Kennfeldes und der geeigneten Spritzbilddaten auf der Betreiberseite erfolgt.

4. Verfahren nach einem der vorhergehenden Ansprüche, **dadurch gekennzeichnet,**
a) **dass** der erste Datensatz mit den geeigneten Spritzbilddaten auch folgende Beschichtungsdaten enthält:
a1) die gewünschte Schichtdicke der Beschichtungsmittelschicht auf der Oberfläche des Bauteils, insbesondere die Schichtdicke im getrockneten Zustand,
a2) eine Beschichtungsmittelkennung zur Identifikation des Beschichtungsmittels und/oder von Eigenschaften des Beschichtungsmittels,
a3) eine Applikationsgerätekennung zur Identifikation des Applikationsgerätes und/oder von Eigenschaften des Applikationsgerätes,
a4) eine Schichtinformation zur Unterscheidung verschiedener Schichten in einer mehrschichtigen Beschichtung, insbesondere zur Unterscheidung einer Basislackschicht und einer Klarlackschicht, und/oder
a5) Bahngeschwindigkeit des Farbauftreffpunkts entlang der Roboterbahn, und/oder
b) **dass** bei der Ermittlung der geeigneten Applikationsparameter nicht nur die in dem ersten Datensatz enthaltenen Spritzbilddaten berücksichtigt werden, sondern auch die in dem ersten Datensatz enthaltenen Beschichtungsdaten und vorzugsweise auch ein Referenzwert für den Bahnabstand, ein Referenzwert für die Bahngeschwindigkeit, die Zielschichtdicke, der Festkörperanteil des Beschichtungsmittels und der Auftragswirkungsgrad des Applikationsgeräts als angenommener Erfahrungswert.

5. Verfahren nach einem der vorhergehenden Ansprüche, **dadurch gekennzeichnet, dass** die Roboterbahndaten folgenden Daten enthalten:
a) räumlicher Verlauf der Roboterbahn, und/oder
b) Bahngeschwindigkeit des Farbauftreffpunkts entlang der Roboterbahn, und/oder
c) Bahnabstand zwischen seitlich benachbarten, seitlich überlappenden oder aneinander angrenzenden Bahnabschnitten der Roboterbahn.

6. Verfahren nach Anspruch 4, **gekennzeichnet durch** folgende Schritte bei der Simulation:
a) Unterteilung der Roboterbahn in mehrere aufeinander folgende Bahnabschnitte, die nacheinander von dem Farbauftreffpunkt des Applikationsgeräts abgefahren werden sollen,
b) Ermittlung eines geeigneten Spritzbildes für die einzelnen Bahnabschnitte der Roboterbahn,
c) Ermittlung eines geeigneten Beschichtungsmittelstroms für die einzelnen Bahnabschnitte der Roboterbahn, insbesondere als prozentualer, relativer oder virtueller Wert,
d) wobei der erste Datensatz mit den geeigneten Spritzbilddaten für die einzelnen Bahnabschnitte der Roboterbahn jeweils das geeignete Spritzbild und den geeigneten Beschichtungsmittelstrom enthalten, insbesondere als prozentualer, relativer oder virtueller Wert,

7. Verfahren nach Anspruch 5 oder 6, **dadurch gekennzeichnet, dass** die Simulation in folgenden iterativen Optimierungsschritten erfolgt:
a) in einem ersten Optimierungsschritt Vorgabe von Standardwerten für das Spritzbild und den Beschichtungsmittelstrom, insbesondere als prozentualer, relativer oder virtueller Wert, und Simulation des resultierenden Beschichtungsergebnisses mit den Standardwerten, und/oder
b) in einem zweiten Optimierungsschritt Prüfung der Schichtdickenhomogenität an einfachen Modulstößen zwischen genau zwei benachbarten Beschichtungsmodulen auf der Oberfläche des zu beschichtenden Bauteils und Optimierung der Roboterbahn zur Verbesserung der Schichtdickenhomogenität an den einfachen Modulstößen, insbesondere zwischen Kotflügel und Motorhaube, zwischen Vordertür und Hintertür und zwischen den Modulen eines Dachs einer Kraftfahrzeugkarosserie, und/oder
c) in einem dritten Optimierungsschritt Prüfung der Schichtdickenhomogenität an komplexen Modulstößen zwischen mehr als zwei benachbarten Beschichtungsmodulen auf der Oberfläche des zu beschichtenden Bauteils und Optimierung der Roboterbahn zur Verbesserung der Schichtdickenhomogenität an den komplexen Modulstößen, insbesondere am Zusammenstoß von Kotflügel, Motorhaube, Vordertür, A-Säule oder zwischen Heck- Kotflügel und - Säule, und/oder
d) in einem vierten Optimierungsschritt Prüfung der Schichtdickenhomogenität an einfachen und/oder komplexen Modulstößen zwischen benachbarten Beschichtungsmodulen auf der Oberfläche des zu beschichtenden Bauteils und Optimierung folgender Größen zur Verbesserung der Schichtdickenhomogenität an den einfachen und/oder komplexen Modulstößen:
d1) Spritzbilddaten, und/oder
d2) Beschichtungsmittelstrom, insbesondere als prozentualer, relativer oder virtueller Wert,
und/oder
e) in einem fünften Optimierungsschritt Prüfung der Schichtdickenhomogenität an Bauteilrändern des zu beschichtenden Bauteils und Optimierung folgender Größen zur Verbesserung der Schichtdickenhomogenität an den Bauteilrändern:
e1) Roboterbahn,
e2) Spritzbilddaten, und/oder
e3) Beschichtungsmittelstrom, insbesondere als prozentualer, relativer oder virtueller Wert.

8. Verfahren nach Anspruch 6, **dadurch gekennzeichnet, dass** die Standardwerte für den ersten Optimierungsschritt der Simulation in Abhängigkeit von folgenden Größen vorgegeben werden:
a) Referenzwert für den Bahnabstand zwischen Mittelachsen von unmittelbar aneinander angrenzenden Beschichtungsbahnen,
b) Überlappung von unmittelbar aneinander angrenzenden Beschichtungsbahnen, und/oder
c) Referenzwert für den Beschichtungsmittelstrom, insbesondere als prozentualer, relativer oder virtueller Wert.

9. Verfahren nach einem der vorhergehenden Ansprüche, **dadurch gekennzeichnet, dass** das simulierte Beschichtungsergebnis auf der Betreiberseite grafisch auf einem Bildschirm dargestellt wird, insbesondere mit einer perspektivischen Darstellung des zu beschichtenden Bauteils als Modell und mit einer ortsabhängigen Einfärbung der Oberfläche des dargestellten Modells in Abhängigkeit von der simulierten lokalen Schichtdicke, insbesondere entsprechend der Abweichung zwischen der simulierten lokalen Schichtdicke einerseits und einem vorgegebenen Sollwert für die Schichtdicke andererseits.

10. Verfahren nach einem der vorhergehenden Ansprüche, **dadurch gekennzeichnet, dass** das Kennfeld für die Ermittlung der geeigneten Applikationsparameter in Bezug auf ein spezifisches Beschichtungsmittel und/oder die verwendete Beschichtungseinrichtung folgende Größen miteinander verknüpft:
a) Breite des Schichtdickenprofils, insbesondere SB50-Wert des Schichtdickenprofils,
b) Lenkluftstrom des Applikationsgeräts,
c) Beschichtungsmittelstrom des Applikationsgeräts,
d) Drehzahl eines Rotationszerstäubers, der als Applikationsgerät eingesetzt wird,
e) Hochspannung einer elektrostatischen Beschichtungsmittelaufladung,
f) Bahngeschwindigkeit des Applikationsgeräts entlang der Roboterbahn,
g) Beschichtungsabstand zwischen dem Applikationsgerät und der Oberfläche des zu beschichtenden Bauteils.

11. Verfahren nach einem der vorhergehenden Ansprüche, **dadurch gekennzeichnet,**
a) **dass** die Vorgabe der Roboterbahndaten auf der Betreiberseite bei dem Beschichtungsanlagenbetreiber erfolgt, insbesondere automatisch oder mit einem unterstützenden Benutzereingriff, und/oder
b) **dass** die Vorgabe der Geometriedaten des zu beschichtenden Bauteils auf der Betreiberseite durch den Beschichtungsanlagenbetreiber erfolgt, insbesondere automatisch oder mit einem unterstützenden Benutzereingriff.

12. Beschichtungsanlage zur Beschichtung von Bauteilen, insbesondere zur Lackierung von Kraftfahrzeugkarosseriebauteilen, mit
a) mindestens einem Beschichtungsroboter,
b) mindestens einem Applikationsgerät, das von dem Beschichtungsroboter geführt wird, und
c) einer Steuerung, die das Applikationsgerät und den Beschichtungsroboter ansteuert, **dadurch gekennzeichnet,**
d) **dass** die Steuerung das Verfahren nach einem der vorhergehenden Ansprüche ausführt.

13. Beschichtungsanlage nach Anspruch 12, **dadurch gekennzeichnet, dass** in der Steuerung das Kennfeld gespeichert ist, um aus den geeigneten Spritzbilddaten die geeigneten Applikationsparameter zu ermitteln.

14. Beschichtungsanlage nach Anspruch 12 oder 13, **gekennzeichnet durch** eine Datenschnittstelle zur Übertragung des ersten Datensatzes mit den geeigneten Spritzbilddaten an den Dienstleister und zum Empfang des zweiten Datensatzes mit den geeigneten Applikationsparametern von dem Dienstleister.

## Claims

1. Method for programming a program-controlled coating installation with a coating robot and an application device for coating components, in particular for programming a painting installation with a painting robot for painting motor vehicle body components, having the following steps (S1-S3):
a) Specification or determination of geometry data, the geometry data representing the geometry of the component to be coated (S1),
b) specification of robot path data (S2),
b1) the robot path data defining a robot path which is to be traversed by a paint impact point of the application device guided by the coating robot in coating operation, and
b2) the robot path being defined on the basis of the predetermined geometry data of the component to be coated,
c) determination of suitable spray pattern data (S3),
c1) the spray pattern data representing a layer thickness profile, in particular a three-dimensional layer thickness profile, which is generated by the application device on the surface of the component around the paint impact point in real coating operation, and
c2) wherein the determined spray pattern data are intended to achieve an acceptable coating result in real coating operation when coating the component along the predetermined robot path,
c3) said suitable spray pattern data being determined by a simulation which takes into account the predetermined robot path data and the geometry data of the component to be coated, wherein the determination of the application parameters is carried out for the operation of the application device after the simulation,
c4) wherein the spray pattern data are optimized during the simulation until an acceptable coating result is simulated, and
c5) wherein the suitable spray pattern data are stored in a first data set (S4), **characterized by** the following steps:
d) determining suitable application parameters for operating the application device (S8),
d1) wherein the suitable application parameters are determined from the spray pattern data contained in the first data set on the basis of a characteristic diagram,
d2) wherein the determined suitable application parameters lead to the suitable spray pattern data during real operation of the application device when the robot path is traversed, and
d3) wherein the suitable application parameters are stored in a second data set (S9), and
e) operating the coating installation (S10),
e1) wherein the coating robot is controlled according to the robot path data so that the paint impact point of the application device traverses the predetermined robot path on the surface of the component to be coated, and
e2) wherein the application device is controlled with the suitable application parameters contained in the second data set.

2. Method according to claim 1, **characterized in,**
a) **that** the determination of the suitable spray pattern data takes place within the framework of the simulation on the operator side at the coating installation operator, in particular automatically or with an assisting user intervention,
b) **that** the first data set with the suitable spray pattern data determined in the course of the simulation is transferred from the operator side to a manufacturer side of the coating installation, in particular at a service provider,
c) **that** the determination of the suitable application parameters is carried out on the manufacturer's side on the basis of the characteristic diagram and the suitable spray pattern data, in particular by the service provider, and
d) **that** the second data set with the suitable application parameters is transmitted from the manufacturer side to the operator side.

3. Method according to one of the preceding claims, **characterized in,**
a) **that** the determination of the suitable spray pattern data is carried out within the framework of the simulation on the operator side at the coating installation operator, in particular automatically or with an assisting user intervention,
b) **that** the characteristic diagram for determining the suitable application parameters is created on the manufacturer's side, in particular by the service provider,
c) **that** the characteristic diagram for determining the suitable application parameters is transmitted by the service provider to the operator side, and
d) **that** the determination of the suitable application parameters is carried out on the operator side on the basis of the characteristic diagram and the suitable spray pattern data.

4. Method according to one of the preceding claims, **characterized in,**
a) **that** the first data set with the suitable spray pattern data also contains the following coating data:
a1) the desired coating thickness of the coating agent layer on the surface of the component, in particular the coating thickness in the dried state,
a2) a coating agent identifier for identifying the coating agent and/or properties of the coating agent,
a3) an application device identifier for identifying the application device and/or properties of the application device,
a4) layer information for distinguishing between different layers in a multilayer coating, in particular for distinguishing between a basecoat layer and a clearcoat layer, and/or
a5) path speed of the paint impact point along the robot path, and/or
b) **that**, in determining the suitable application parameters, not only the spray pattern data contained in the first data set are taken into account, but also the coating data contained in the first data set and preferably also a reference value for the path spacing, a reference value for the path speed, the target layer thickness, the solids content of the coating agent and the application efficiency of the application device as an assumed empirical value.

5. Method according to one of the preceding claims, **characterized in that** the robot path data contain the following data:
a) spatial course of the robot path, and/or
b) path speed of the paint impact point along the robot path, and/or
c) path spacing between laterally adjacent, laterally overlapping or adjacent path sections of the robot path.

6. Method according to claim 4, **characterized by** the following steps in the simulation:
a) Subdivision of the robot path into a plurality of successive path sections which are to be traversed in succession by the paint impact point of the application device,
b) determination of a suitable spray pattern for the individual path sections of the robot path,
c) determination of a suitable coating agent flow for the individual path sections of the robot path, in particular as a percentage, relative or virtual value,
d) wherein the first data set with the suitable spray pattern data for the individual path sections of the robot path each contain the suitable spray image and the suitable coating agent flow, in particular as a percentage, relative or virtual value,

7. Method according to claim 5 or 6, **characterized in that** the simulation is carried out in the following iterative optimization steps:
a) in a first optimization step, specification of default values for the spray pattern and the coating agent flow, in particular as a percentage, relative or virtual value, and simulation of the resulting coating result with the default values, and/or
b) in a second optimization step, testing the coating thickness homogeneity at simple module joints between exactly two adjacent coating modules on the surface of the component to be coated and optimizing the robot path to improve the coating thickness homogeneity at the simple module joints, in particular between the fender and the hood, between the front door and the rear door and between the modules of a roof of a motor vehicle body, and/or
c) in a third optimization step, testing the layer thickness homogeneity at complex module joints between more than two adjacent coating modules on the surface of the component to be coated and optimizing the robot path to improve the layer thickness homogeneity at the complex module joints, in particular at the junction of fender, hood, front door, A-pillar or between rear fender and rear pillar, and/or
d) in a fourth optimization step, testing of the coating thickness homogeneity at simple and/or complex module joints between adjacent coating modules on the surface of the component to be coated and optimization of the following variables for improving the coating thickness homogeneity at the simple and/or complex module joints:
d1) spray pattern data, and/or
d2) coating agent flow, in particular as a percentage, relative or virtual value,
and/or
e) in a fifth optimization step, testing of the coating thickness homogeneity at component edges of the component to be coated and optimization of the following variables for improving the coating thickness homogeneity at the component edges:
e1) Robot path,
e2) spray pattern data, and/or
e3) coating agent flow, in particular as a percentage, relative or virtual value.

8. Method according to claim 6, **characterized in that** the default values for the first optimization step of the simulation are specified as a function of the following variables:
a) reference value for the path distance between center axes of directly adjacent coating paths,
b) overlap of directly adjacent coating paths, and/or
c) reference value for the coating agent flow, in particular as a percentage, relative or virtual value.

9. Method according to one of the preceding claims, **characterized in that** the simulated coating result is represented graphically on a screen on the operator side, in particular with a perspective representation of the component to be coated as a model and with a location-dependent coloring of the surface of the represented model as a function of the simulated local coating thickness, in particular corresponding to the deviation between the simulated local coating thickness on the one hand and a predetermined reference value for the coating thickness on the other hand.

10. Method according to one of the preceding claims, **characterized in that** the characteristic diagram for determining the suitable application parameters in relation to a specific coating agent and/or the coating device used links the following variables with one another:
a) Width of the coating thickness profile, in particular SB50 value of the coating thickness profile,
b) shaping air flow of the application device,
c) coating agent flow of the application device,
d) rotational speed of a rotary atomizer used as application device,
e) high voltage of an electrostatic coating agent charge,
f) path speed of the application device along the robot path,
g) coating distance between the application device and the surface of the component to be coated.

11. Method according to one of the preceding claims, **characterized in,**
a) **that** the robot path data are specified on the operator side at the coating installation operator, in particular automatically or with an assisting user intervention, and/or
b) **that** the geometry data of the component to be coated is specified on the operator side by the coating installation operator, in particular automatically or with an assisting user intervention.

12. Coating installation for coating components, in particular for painting motor vehicle body components, having
a) at least one coating robot,
b) at least one application device which is guided by the coating robot, and
c) a control which controls the application device and the coating robot, **characterized in**
d) **that** the control executes the method according to one of the preceding claims.

13. Coating installation according to claim 12, **characterized in that** the characteristic diagram is stored in the control in order to determine the suitable application parameters from the suitable spray pattern data.

14. Coating installation according to claim 12 or 13, **characterized by** a data interface for transmitting the first data set with the suitable spray pattern data to the service provider and for receiving the second data set with the suitable application parameters from the service provider.

## Revendications

1. Procédé de programmation d'une installation de revêtement commandée par programme, comprenant un robot de revêtement et un appareil d'application pour le revêtement de composants, en particulier pour la programmation d'une installation de peinture comprenant un robot de peinture pour la peinture de composants de carrosserie automobile, comprenant les étapes suivantes (S1-S3) :
a) spécification ou détermination de données géométriques, les données géométriques reproduisant la géométrie de la pièce à revêtir (S1),
b) spécification de données de trajectoire du robot (S2),
b1) les données de trajectoire du robot définissant une trajectoire du robot qui doit être parcourue à partir d'un point d'application de la peinture de l'appareil d'application guidé par le robot de revêtement en mode de revêtement, et
b2) la trajectoire du robot étant déterminée à l'aide des données géométriques prédéfinies de la pièce à revêtir,
c) Détermination de données de pulvérisation adéquates (S3),
c1) les données de pulvérisation reproduisant un profil d'épaisseur de couche, en particulier un profil d'épaisseur de couche tridimensionnel, qui est généré en mode de revêtement réel par l'appareil d'application sur la surface du composant autour du point d'application de la peinture, et
c2) les données de pulvérisation déterminées étant destinées à obtenir un résultat de revêtement acceptable dans des conditions réelles de revêtement lors du revêtement de la pièce le long de la trajectoire prédéfinie du robot,
c3) les données de pulvérisation adéquates étant déterminées par une simulation qui tient compte des données de trajectoire prédéfinies du robot et des données géométriques de la pièce à revêtir, la détermination des paramètres d'application pour le fonctionnement de l'appareil d'application s'effectuant après la simulation,
c4) les données de pulvérisation étant optimisées lors de la simulation jusqu'à ce qu'un résultat de revêtement acceptable soit simulé, et
c5) les données de pulvérisation adéquates étant enregistrées dans un premier ensemble de données (S4),
**caractérisé par** les étapes suivantes :
d) détermination de paramètres d'application adéquats pour le fonctionnement de l'appareil d'application (S8),
d1) les paramètres d'application adéquats étant déterminés à partir des données de pulvérisation contenues dans le premier ensemble de données à l'aide d'un champ caractéristique,
d2) les paramètres d'application adéquats ainsi déterminés conduisant aux données de pulvérisation adéquates lors du fonctionnement réel de l'appareil d'application lors du déplacement de long de la trajectoire robot, et
d3) les paramètres d'application adéquats étant enregistrés dans un deuxième ensemble de données (S9), et
e) fonctionnement de l'installation de revêtement (S10),
e1) le robot de revêtement étant commandé conformément aux données de trajectoire du robot, de telle sorte que le point d'application de la peinture de l'appareil d'application suive la trajectoire prédéfinie du robot sur la surface du composant à revêtir, et
e2) l'appareil d'application étant commandé avec les paramètres d'application adéquats contenus dans le deuxième ensemble de données.

2. Procédé selon la revendication 1, **caractérisé en ce que**
a) la détermination des données de pulvérisation adéquates dans le cadre de la simulation est effectuée, côté opérateur, par l'opérateur de l'installation de revêtement, en particulier automatiquement ou avec l'intervention assistée de l'utilisateur,
b) le premier ensemble de données déterminé dans le cadre de la simulation à l'aide des données de pulvérisation adéquates est transmis par l'opérateur au fabricant de l'installation de revêtement, en particulier à un prestataire de services,
c) la détermination des paramètres d'application adéquats à l'aide du champ caractéristique et des données de pulvérisation adéquates est effectuée par le fabricant, en particulier par le prestataire de services, et
d) le deuxième ensemble de données avec les paramètres d'application adéquats est transmis par le fabricant à l'opérateur.

3. Procédé selon l'une des revendications précédentes, **caractérisé en ce que**
a) la détermination des données de pulvérisation adéquates dans le cadre de la simulation est effectuée, côté opérateur, par l'opérateur de l'installation de revêtement, en particulier automatiquement ou avec l'intervention assistée de l'utilisateur,
b) que le champ caractéristique permettant de déterminer les paramètres d'application adéquats est créé côté fabricant, en particulier par le prestataire de services,
c) que le champ caractéristique permettant de déterminer les paramètres d'application adéquats est transmis par le prestataire de services à l'opérateur, et
d) que la détermination des paramètres d'application adéquat s'effectue à l'aide du champ caractéristique et des données de pulvérisation adéquates côté opérateur.

4. Procédé selon l'une des revendications précédentes, **caractérisé en ce que**
a) le premier ensemble de données contenant les données de pulvérisation adéquates comprend également les données de revêtement suivantes :
a1) l'épaisseur souhaitée de la couche d'agent de revêtement sur la surface du composant, en particulier l'épaisseur de la couche à l'état sec,
a2) la désignation de l'agent de revêtement pour identifier l'agent de revêtement et/ou les propriétés de l'agent de revêtement,
a3) la désignation de l'appareil d'application pour identifier l'appareil d'application et/ou les propriétés de l'appareil d'application,
a4) une information sur les couches pour distinguer différentes couches dans un revêtement multicouche, en particulier pour distinguer une couche de peinture de base et une couche de vernis transparent, et/ou
a5) la vitesse de déplacement du point d'application de la peinture le long de la trajectoire du robot, et/ou
b) lors de la détermination des paramètres d'application adéquats, non seulement les données de pulvérisation contenues dans le premier ensemble de données sont prises en compte, mais également les données de revêtement contenues dans le premier ensemble de données et, de préférence, également une valeur de référence pour la distance entre les bandes, une valeur de référence pour la vitesse de déplacement, l'épaisseur de couche cible, la teneur en matière solide de l'agent de revêtement et le rendement d'application de l'appareil d'application en tant que valeur empirique supposée.

5. Procédé selon l'une des revendications précédentes, **caractérisé en ce que** les données de trajectoire du robot contiennent les données suivantes :
a) la trajectoire spatiale du robot, et/ou
b) la vitesse de déplacement du point d'application de la peinture le long de la trajectoire du robot, et/ou
c) la distance entre les bandes latéralement adjacentes, se chevauchant latéralement ou contiguës de la trajectoire du robot.

6. Procédé selon la revendication 4, **caractérisé par** les étapes suivantes lors de la simulation :
a) subdivision de la trajectoire du robot en plusieurs bandes de trajectoire successives qui doivent être parcourues les unes après les autres par le point d'application de la peinture de l'appareil d'application,
b) détermination d'une pulvérisation adéquate pour les différentes bandes de trajectoire du robot,
c) détermination d'un débit d'agent de revêtement adéquat pour les différentes bandes de trajectoire du robot, en particulier sous forme de valeur en pourcentage, relative ou virtuelle,
d) le premier ensemble de données contenant les données de pulvérisation adéquates pour les différentes bandes de trajectoire du robot contenant respectivement le profil de pulvérisation adéquat et le débit d'agent de revêtement adéquat, en particulier sous forme de valeur en pourcentage, relative ou virtuelle,

7. Procédé selon la revendication 5 ou 6, **caractérisé en ce que** la simulation s'effectue selon les étapes d'optimisation itératives suivantes :
a) dans une première étape d'optimisation, définition de valeurs standard pour la pulvérisation et le débit d'agent de revêtement, en particulier sous forme de valeur en pourcentage, relative ou virtuelle, et simulation du résultat de revêtement obtenu avec les valeurs standard, et/ou
b) dans une deuxième étape d'optimisation, contrôle de l'homogénéité de l'épaisseur de la couche au niveau des joints simples entre deux modules de revêtement adjacents sur la surface de la pièce à revêtir et optimisation de la trajectoire du robot afin d'améliorer l'homogénéité de l'épaisseur de la couche au niveau des joints simples, en particulier entre l'aile et le capot, entre la porte avant et la porte arrière et entre les modules d'un toit d'une carrosserie de véhicule automobile, et/ou
c) dans une troisième étape d'optimisation, contrôle de l'homogénéité de l'épaisseur de couche au niveau des joints complexes entre plus de deux modules de revêtement adjacents sur la surface de la pièce à revêtir et optimisation de la trajectoire du robot afin d'améliorer l'homogénéité de l'épaisseur de couche au niveau des joints complexes, en particulier au niveau de la jonction entre l'aile, le capot, la porte avant, montant A ou entre l'aile arrière et le montant arrière, et/ou
d) dans une quatrième étape d'optimisation, contrôle de l'homogénéité de l'épaisseur de couche au niveau des joints simples et/ou complexes entre modules de revêtement adjacents sur la surface de la pièce à revêtir et optimisation des grandeurs suivantes afin d'améliorer l'homogénéité de l'épaisseur de couche au niveau des joints simples et/ou complexes :
d1) données de pulvérisation, et/ou
d2) débit d'agent de revêtement, en particulier sous forme de valeur en pourcentage, relative ou virtuelle,
et/ou
e) dans une cinquième étape d'optimisation, contrôle de l'homogénéité de l'épaisseur de revêtement sur les bords du composant à revêtir et optimisation des grandeurs suivantes afin d'améliorer l'homogénéité de l'épaisseur de revêtement sur les bords du composant :
e1) trajectoire du robot,
e2) données de pulvérisation, et/ou
e3) débit d'agent de revêtement, notamment sous forme de valeur en pourcentage, relative ou virtuelle.

8. Procédé selon la revendication 6, **caractérisé en ce que** les valeurs standard pour la première étape d'optimisation de la simulation sont prédéfinies en fonction des grandeurs suivantes :
a) valeur de référence pour la distance entre les bandes entre les axes centraux de trajectoires de revêtement directement adjacentes,
b) chevauchement de trajectoires de revêtement directement adjacentes, et/ou
c) valeur de référence pour le débit d'agent de revêtement, en particulier sous forme de valeur en pourcentage, relative ou virtuelle.

9. Procédé selon l'une des revendications précédentes, **caractérisé en ce que** le résultat de revêtement simulé est représenté graphiquement sur un écran côté opérateur, en particulier avec une représentation en perspective du composant à revêtir sous forme de modèle et avec une coloration de la surface du modèle représenté en fonction de l'épaisseur de couche locale simulée, en particulier en fonction de l'écart entre l'épaisseur de couche locale simulée d'une part et une valeur de consigne prédéfinie pour l'épaisseur de couche d'autre part.

10. Procédé selon l'une des revendications précédentes, **caractérisé en ce que** le champ caractéristique pour la détermination des paramètres d'application adéquats par rapport à un agent de revêtement spécifique et/ou au dispositif de revêtement utilisé relie entre elles les grandeurs suivantes :
a) largeur du profil d'épaisseur de couche, en particulier valeur SB50 du profil d'épaisseur de couche,
b) débit d'air de guidage de l'appareil d'application,
c) débit d'agent de revêtement de l'appareil d'application,
d) vitesse de rotation d'un pulvérisateur rotatif utilisé comme appareil d'application,
e) haute tension d'une charge électrostatique de l'agent de revêtement,
f) vitesse de déplacement de l'appareil d'application le long de la trajectoire du robot,
g) distance de revêtement entre l'appareil d'application et la surface de la pièce à revêtir.

11. Procédé selon l'une des revendications précédentes, **caractérisé en ce que**
a) la spécification des données de trajectoire du robot est effectuée côté opérateur par l'opérateur de l'installation de revêtement, en particulier automatiquement ou avec l'intervention assistée de l'utilisateur, et/ou
b) la spécification des données géométriques du composant à revêtir est effectuée côté opérateur par l'opérateur de l'installation de revêtement, en particulier automatiquement ou avec l'intervention assistée de l'utilisateur.

12. Installation de revêtement pour le revêtement de composants, en particulier pour la peinture de composants de carrosserie automobile, comprenant
a) au moins un robot de revêtement,
b) au moins un appareil d'application guidé par le robot de revêtement, et
c) une commande qui commande l'appareil d'application et le robot de revêtement, **caractérisé en ce que**
d) la commande exécute le procédé selon l'une des revendications précédentes.

13. Installation de revêtement selon la revendication 12, **caractérisée en ce que** le champ caractéristique est enregistré dans la commande afin de déterminer les paramètres d'application adéquats à partir des données de pulvérisation adéquates.

14. Installation de revêtement selon la revendication 12 ou 13, **caractérisée par** une interface de données pour transmettre le premier ensemble de données avec les données de pulvérisation adéquates au prestataire de services et pour recevoir le deuxième ensemble de données avec les paramètres d'application adéquats du prestataire de services.
